# EUROPEAN PATENT APPLICATION

(11) **EP 1 936 516 A1**
(43) Date of publication of application: **25.06.2008**
(21) Application number: 06127153.2
(22) Date of filing: 22.12.2006
(51) Int. Cl.: G06F 17/24, G06F 17/30

(54) **Method to directly and automatically load data from documents and/or extract data to documents**

(71) Applicant: PRB S.r.l., 20135 Milano (IT)
(72) Inventor: Carbonera, Antonio, 27100 Pavia (IT); Forlani, Paolo, 20135 Milano (IT)
(74) Representative: Borsano, Corrado

(57) **Abstract**

The present invention provides for a method for directly and automatically loading data from documents and/or extracting data to documents, characterized in that it provides for the direct and automatic conversion of data in two directions, respectively: a first direction of " loading from documents", in a "loading step", from free text and data, to data rigidly organized; a second direction of "extraction to documents", in an "extraction step", from data rigidly organized, to text and free data. The "loading step" comprises: setting predefined rules; on the basis of said predefined rules recognizing said free text and data on the basis of their context, their position in the text, their format; creating a consistent set of corresponding business data; automatically inputting the set of corresponding business data into boxes of screens to create said data rigidly organized. The "extraction step" comprises: reading data directly from the boxes containing said data rigidly organized; setting a configuration file with a predefined format for said data; creating a text document or a spreadsheet where said data are organized to compose said text and free data.

## Description

The present invention relates to a method to directly and automatically load data from documents and/or extract data to documents.

In the informatics field, there are known on one side, personal informatics programs used to create or modify text and numeric data, like Editors or Spreadsheets, referred to in the following as "personal informatics programs", and, on the other side, programs used to follow and perform the different steps of a business file, referred to in the following as "Business management programs".

These two main kinds of programs have a completely different kind of operation and often are used by personnel with different culture and experience: for instance, a Manager of a company understands and normally uses an editor to prepare messages, while a Clerk uses the business management program to prepare invoices and to check their payment.

Business management programs base their operation on fixed data inserted in rigidly predefined boxes (i.e. Number of Invoice, Amount, VAT..), while personal informatics programs allow to insert data in any position and sequence, in a free format structure.

A user of personal informatics programs cannot operate on business management programs, without a complex particular training; on the other side, there are cases where a user of this kind wants to operate these programs and the intermediation of another person represents a duplication of activities, with waste of time and possibility to introduce errors. Therefore a problem arises in terms of difficult and time consuming users interfacing procedures for transferring data from one kind of program to the other one.

It is not yet known a solution to the technical problem of creating a direct interaction between Business management programs and personal informatics programs, such that the data can easily and automatically be transferred or copied from one side to the other side and converted into a suitable format to be handled, so as to considerably save computer time and resources, in terms of number of program instructions or routines to be performed.

Therefore the purpose of the present invention is to solve the aforementioned problems, and to provide a method to directly and automatically load data from documents and/or extract data to documents, so as to create a direct interaction between Business management programs and personal informatics programs, such that the data can easily and automatically be transferred or copied from one side to the other side and converted into a suitable format to be handled.

It is a particular subject of the present invention a method for directly and automatically loading data from documents and/or extracting data to documents, characterized in that
it provides for the direct and automatic conversion of data in two directions, respectively:
- a first direction of "loading from documents", in a "loading step", from free text and data, to data rigidly organized into boxes of business management program;
- a second direction of "extraction to documents", in an "extraction step", from data rigidly organized into boxes of business management program, to text and free data;
   also characterized in that said "loading step" comprises:

- setting predefined rules;
- on the basis of said predefined rules recognizing said free text and data on the basis of their context, their position in the text, their format;
- creating a consistent set of corresponding business data;
- automatically inputting the set of corresponding business data into boxes of business management program to create said data rigidly organized;
   also characterized in that said "extraction step" comprises:

- reading data directly from the boxes of business management program containing said data rigidly organized;
- setting a configuration file with a predefined format for said data;
- creating a text document or a spreadsheet where said data are organized to compose said text and free data.

These and further objects are achieved by means of an apparatus and method as described in the attached claims, which are considered an integral part of the present description.

The invention will become fully clear from the following detailed description, given by way of a mere exemplifying and non limiting example, to be read with reference to the attached drawing figures, wherein:
- Figure 1 and figure 3 show an example of two kinds of documents, correspondingly created with the method subject of the invention, respectively in the loading step and in the extraction step;
- Figures 2 and 4 show flow-charts of an example of computer program implementing respectively the loading step and the extraction step.

The method to directly and automatically load data from documents and/or extract data to documents subject of the invention is described in the following.

The method provides for the direct and automatic conversion of data in two directions, in two corresponding steps:
First direction, called " loading from documents", in a "loading step":
   - From: free text and data, as they are organized in personal informatics programs,
   - To: data rigidly organized, as in a business management program.
Second direction, called "extraction to documents", in an "extraction step":
   - From: data rigidly organized as in a business management program
   - To: text and free data, as they are organized in personal informatics programs.

In the "extraction step", the computer program created according to the method reads data directly from the rigid boxes of the screens processed by business management programs and, according to a predefined format, it creates a text document or a spreadsheet where data are organized in a fashion that can be easily read and modified by any person that knows how to use the appropriate personal informatics program.

The user can add and/or modify all the data he wants, then submits the document to the loading phase.

In the "loading step" the computer program created according to the method, on the basis of predefined rules, recognizes business data, in documents processed by personal informatics programs, from their context, their position in the text, their format and creates a consistent set of business data; then it inputs the set of data into the boxes of the screens processed by the business management programs.

The two steps of the method are described in more details in the following with reference to the figures.

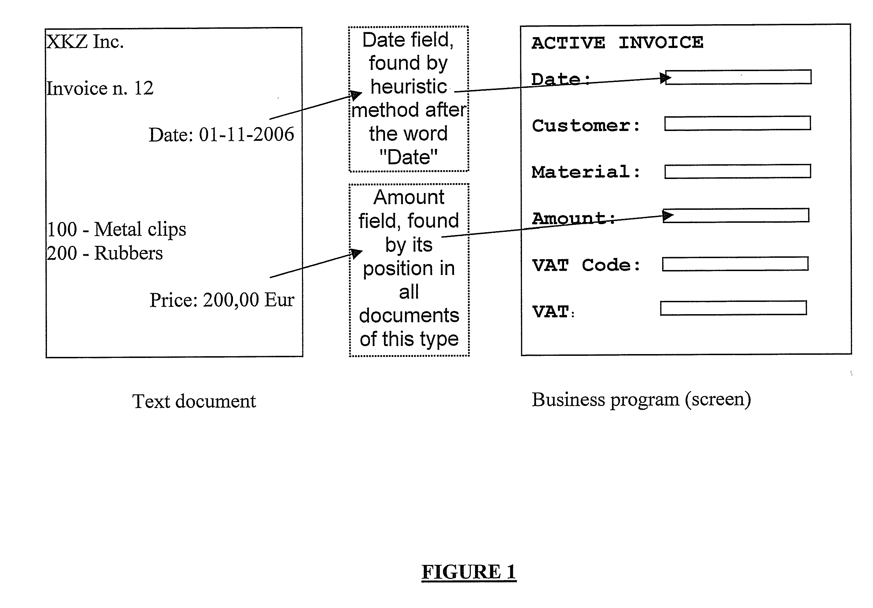

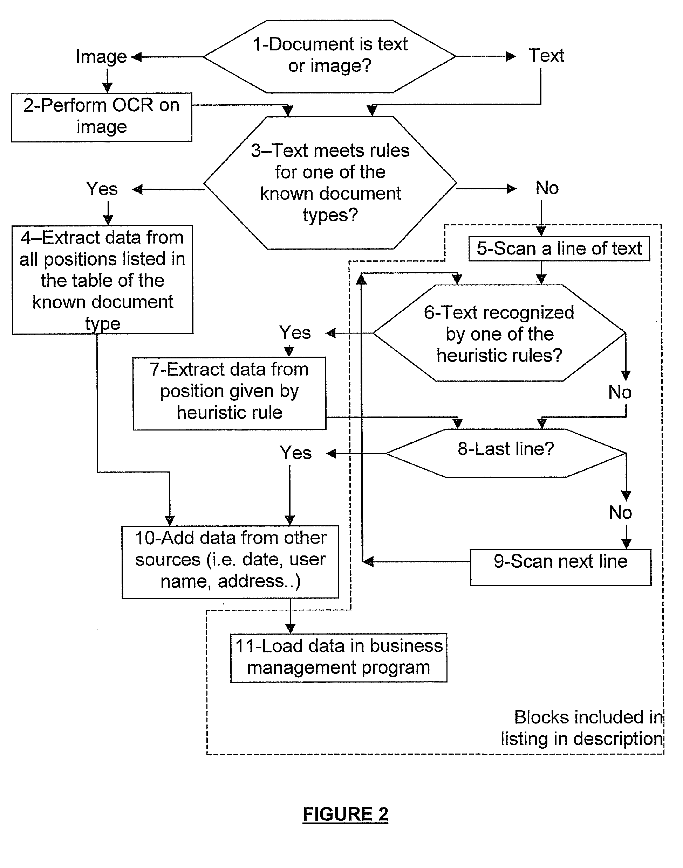

With reference to figures 1 and 2, the loading step is described.

Figure 1 shows an example of two kinds of data organizations, on the left side a text document, created and handled by a personal informatics program, and on the right side a screen with rigid boxes, created and handled by a business management program.

The text is read in the text document , directly if it is in digital format, or by performing OCR (Optical character recognition) if it is in image format. Then the read fields of the text document are converted from text to business data on the basis of a set of rules, stored in tables that contain factory predefined values which can be updated or modified.
The set of rules comprises rules of two kinds:
- Heuristic rules: general rules that can be applied to any document. For instance, after the word "Date" the program has to search for a string in the appropriate date format; if it is found, this becomes the date input in the business program. Another way to find reference legends in a word processor text is to search for "title" fields or for bold characters. See drawing 3, loading phase block 6.
- Document specific rules: when an organization uses the same kind of document format repeatedly, in a separate "learning" phase an operator specifies the position (row, column or x, y coordinates) of all variable and fixed key data. The positions are stored as rules for that specific document. In the loading phase, the program distinguishes the kind of document by the position of fixed key data, and then uses the stored positions to extract data for the business management program. See drawing 3, loading phase block 3.

Figure 2 shows an example of flow-chart of the part of the computer program subject of the invention, performing the loading step, with the following sequence shown in the blocks:
At the beginning a test is made (block 1-Document is text or image?);
If it is an image, go to block 2, else go to block 3.
In the block 2: Perform OCR on image, then go to block 3.
In the block 3 a test is made if text meets rules for one of the known document types? If Yes go to block 4, else go to block 5.
In the block 4: Extract data from all positions listed in the table of the known document type, then go to block 10.
In the block 5: Scan a line of text, then go to block 6.
In the block 6 a test is made if: Text recognized by one of the heuristic rules? If Yes go to block 7, else go to block 8.
In the block 7: Extract data from position given by heuristic rule, then go to block 8.
In the block 8 a test is made if: the line is Last line?. If Yes go to block 10, else go to block 9.
In the block 9: Scan next line, then go back to block 6.
In the block 10: Add data from other sources (i.e. date, user name, address..), then go to block 11: Load data in business management program.

When the data are ready (block 11), they are "keyed in" automatically (simulating key presses) in the business management program, that "thinks" that data are keyed in by a human operator. The business management program can thus be used "as it is", without modifications.

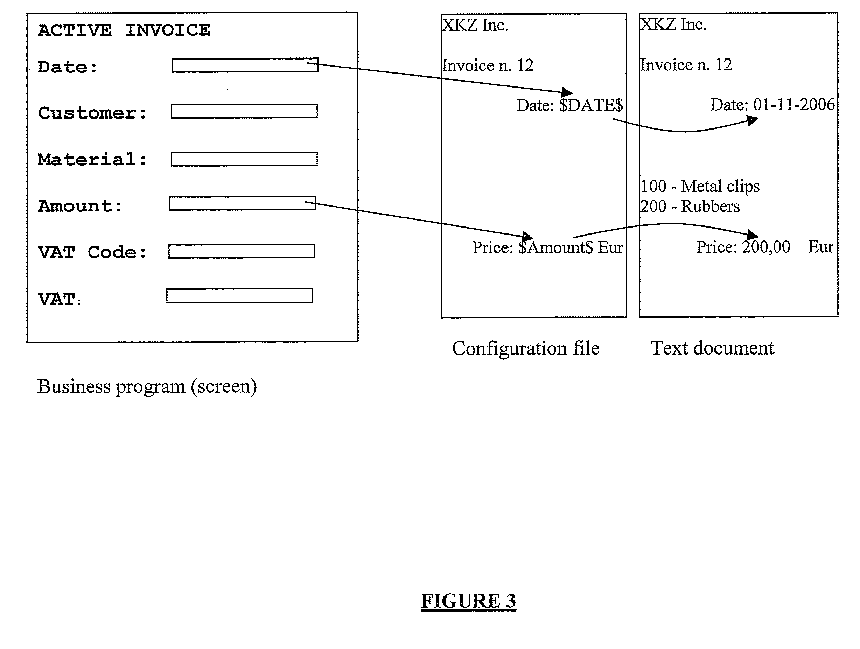

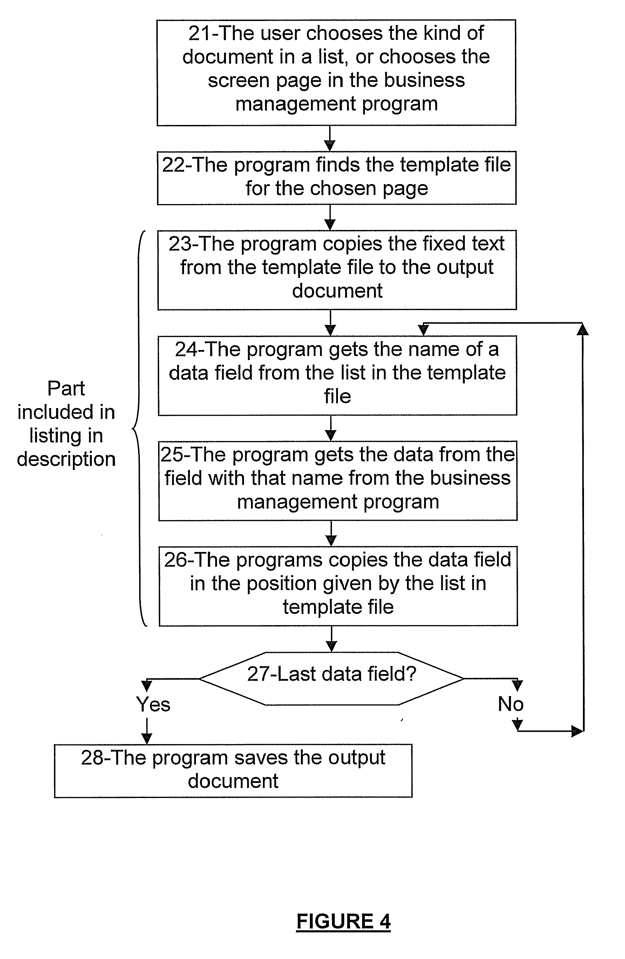

With reference to figures 3 and 4, the Extraction step is described.

Figure 3 shows an example of two kinds of data arrangements (the same data of figure 1), on the right side a text document, created and handled by a personal informatics program, and on the left side a screen with rigid boxes, created and handled by a business management program.

In a separate "configuration step", for each different data screen of the business program, a configuration file is prepared that states the format of the final document and the position of all data in it.

The template file is composed of a document with all fixed data (in the same position as in the final document), and of a list of variable data: each entry of this list contains the name of every piece of data in the document of the business management program, together with the position (row, column or x,y coordinates) of data in the final document.

Several pages of the document of the business management program can also be associated with a single text or spreadsheet document.

Figure 4 shows an example of flow-chart of the part of the computer program subject of the invention, performing the extraction step, with the following sequence shown in the blocks:
First (block 21) the user chooses the type of document from a list, or goes to a data screen in the business management program and presses a special key.
Then (block 22) the program finds the template file for the wanted document.
Then (block 23) the program copies all fixed parts of the document from the template file to the output document.

The program then simulates key presses and screen readings to select the wanted data pages in the business management program and to read data; then it applies the list in the template file to transfer data to the right positions of the final document (blocks 24, 25, 26 in figure 4). This is made for each data field, namely in block 27 check if last data field: if not return to block 24, if Yes go to end, in block 28 the program saves the output document.

In a variant to the procedure of blocks 24, 25, 26, instead of using simulated key presses and simulated reading of the screen, the program can send data to and receive data from the business management program directly, through the use of Application Program Interfaces (API), if available, which retrieve data from business management program specific fields and send them directly to the personal informatics program.

In another variant, instead of using simulated key presses and simulated reading of the screen, the program can send data to and receive data from the business program by writing data into the database of the business program or by reading data from the database.

As an example of a computer program implementation of the method subject of the invention, in the following a listing is given of a piece of code that, in a typical implementation of a Visual Basic program that carries out the method, performs the part of the loading step relating to the loading from a Word document. This part corresponds to the implementation of the steps 5, 6, 7, 8, 9 and 11 in figure 2.

### Load data from a Word Document

```
 'instantiate new application
       wordApp = New Microsoft.Office.Interop.Word.Application
       wordApp.Visible = True
 For i As Integer = 1 To totIndex
  If Me.CategoriesLoaded.Item("K" & CatCode).UserIndexes.Item(i).SectionCode
 <> "" Then
 ' the current header is the string in the Description field of then Section identified
 by
 ' the section code of the i-th userIndex object of the given category
 strHeader = Me.ItemListModels.Item("K" & Me.CategoriesLoaded.Item("K" &
 CatCode).WordModelCode).Sections.Item("K" & Me.CategoriesLoaded.Item("K" &
 CatCode). UserIndexes.Item(i).SectionCode).Description
 myRange = wordDoc.Content
 mySel = wordApp.Selection
 mySel.Start = 0
 mySel.End = 0
```

### Block 5

```
 With myRange.Find
 .Style = strStyle
 .Text = strHeader
 .Replacement.Text = ""
 .Forward = True
```

### Block 6

```
 .Wrap =
 Microsoft.Office.Interop.Word.WdFindWrap.wdFindStop
 blnFound = myRange.Find.Execute
 End With
```

### Block 7

```
 If blnFound = True Then
 mySel.Start = myRange.Start
 mySel.Start = myRange.Start
 tmpStart = mySel.Start
```

### Block 8/9

```
 ' move one line down
 mySeI.MoveStart(Unit:=Microsoft.Office.Interop.Word.WdUnits.wdParagraph,
 Count:=1)
 myRange.Start = mySel.Start
 loopGuard = 0
 tmpEnd = 0
 Do
 Try
 ' selects the text under the Header until it finds another header (checking the text
 style)
 mySel.EndKey(Unit:=Microsoft.Office.Interop.Word.WdUnits.wdLine,
 Extend:=Microsoft.Office.Interop.Word.WdMovementType.wdExtend)
 mySel.MoveLeft(Unit:=Microsoft.Office.Interop.Word.WdUnits.wdCharacter,
 Count:=1, Extend:=Microsoft.Office.Interop.Word.WdMovementType.wdExtend)
 wrdStyle = mySel.Style
 If Not wrdStyle Is Nothing Or loopGuard > 100 Then
 If wrdStyle.NameLocal = strStyle Or (mySel.End > wordDoc.Content.End - 2) Or
 loopGuard > 100 Then
 Exit Do
 Else
 tmpEnd = myRange.End
 myRange. End = mySel.End
 If myRange.End <= tmpEnd Then
   loopGuard += 1
 End If
 mysel.Movestart(Unit:=Microsoft.Office.Interop.Word.WdUnits.wdLine, Count:=1)
 End If
 Else
 loopGuard += 1
 End If
 End Try
 Loop
```

### Block 11

```
 ' now store the text found in the index
 While (True)
 ' copies the selected text into a new Word file
 ' since the WordApp object might respond slowly, a monitor is employed
 ' to verify if the object is available
 blnAcquired = System.Threading.Monitor.TryEnter(wordDoc, 1000)
 If blnAcquired Then
   ' check whether the index is a user index or a item's attribute
   strTest = Me.CategoriesLoaded.Item("K" &
 CatCode). UserIndexes.Item(i).IndexCode
   If strTest = "CAT" Or strTest = "CATNAM" Or strTest = "COD" Or strTest =
 "AUTINS" Or strTest = "AUTUPD" Or_
   strTest = "DATINS" Or strTest = "DATUPD" Or strTest = "OBS" Or strTest =
 "LEV"_
   Or strTest = "REL" Or strTest = "NAM" Then
     strTemp = myRange.Text()
     strTemp = Trim(strTemp)
     Source Item.Indexes.Item("K" & Me.CategoriesLoaded.Item("K" &
 CatCode).UserIndexes.Item(i).IndexCode).Value = strTemp
        Select Case strTest
      Case "COD"
        If strTemp.Length > 100 Then
          SourceItem.ProductCode = strTemp.Substring(0, 100)
        Else
          Sourceltem.ProductCode = strTemp
        End If
      Case "OBS"
          Sourceltem. Obsolete = Not (strTemp.IndexOf("N") > 0 Or
 strTemp.IndexOf("n") > 0 Or strTemp.IndexOf("F") > 0 Or strTemp.IndexOf("F") >
 0 Or strTemp.ToUpper = "NO" Or strTemp = "0")
  Elself Me.IndexesLoaded.Item("K" & strTest).LinkMode = LinkType.Format
 Then
   ' we need to create a new file in the cache and associate it to the UserIndex
   dummy =
 wordApp. Documents.Add(DocumentType:=Microsoft.Office.Interop.Word.WdNew
 DocumentType.wdNewBlankDocument)
   dummyRange = dummy.Content
   If myRange.End > myRange.Start Then
     myRange.Copy()
      dummyRange. PasteAndFormat(Microsoft.Office.Interop.Word.WdRecovery
 Type.wdPasteDefault)
     System.Threading.Monitor. Exit(wordDoc)
     cachePath =
 Environment.GetFolderPath(Environment.SpecialFolder.LocalApplicationData) &
 "\" & CACHE_SUBPATH
     strTemp = utilX.GenerateRandomString(10, 20, True, False, True, False)
     dummy.AcceptAllRevisions()
     dummy.SaveAs(cachePath & "\" & strTemp & ".rtf", 6)' 6= wdFormatRTF
     SourceItem.Indexes.Item("K" & Me.CategoriesLoaded.Item("K" &
 CatCode).UserIndexes.Item(i).IndexCode).FileName = cachePath & "\" & strTemp
 & ".rtf"
   End If
   dummyRange = Nothing
   dummy.Close()
   dummy = Nothing
 Else
 ' the value is written directly into the Value property of the index
 strTemp = myRange.Text()
 If Not strTemp Is Nothing Then
   If Me.IndexesLoaded.Item("K" & strTest).Type = IndexType.Text AndAlso_
   Me.IndexesLoaded.Item("K" & Me.Categories Loaded. Item("K" &
      CatCode). UserIndexes. Item (i). Indexcode). MaxLength > 0 Then
      ITemp = CInt(Me.IndexesLoaded.Item("K" & Me.CategoriesLoaded.Item("K"
 & CatCode). UserIndexes. Item (i). Indexcode).MaxLength)
       If ITemp < strTemp.Length Then
          strTemp = strTemp.Substring(0, ITemp)
       End If
   End If
   ' treat the boolean case
   If Me. IndexesLoaded.Item("K" & strTest).Type = IndexType.Bool Then
      If Not (strTemp.IndexOf("N") > 0 Or strTemp.IndexOf("n") > 0 Or
 strTemp.IndexOf("F") > 0 Or strTemp.IndexOf("F") > 0 Or strTemp.ToUpper =
 "NO" Or strTemp = "0") Then
       SourceItem.Indexes.Item("K" & Me.CategoriesLoaded.Item("K" &
 CatCode).UserIndexes.Item(i).IndexCode).Value = "1"
      Else
       Sourceltem.Indexes.Item("K" & Me.CategoriesLoaded.Item("K" &
 CatCode).UserIndexes.Item(i).IndexCode).Value = "0"
      End If
   Else
      SourceItem.Indexes.Item("K" & Me.CategoriesLoaded.Item("K" &
 CatCode).UserIndexes.Item(i).IndexCode).Value = Trim(strTemp)
   End If
 Else ' value is nothing
   If Me.IndexesLoaded.Item("K" & strTest).Type = IndexType.Bool Then
      Sourceltem.Indexes.Item("K" & Me.CategoriesLoaded.Item("K" &
 CatCode).Userlndexes.Item(i).IndexCode).Value = "0"
   End If
 End If
 End If
 Exit While
```

### End While

As another example of a computer program implementation of the method subject of the invention, in the following a listing is given of a piece of code that, in a typical implementation of a Visual Basic program that carries out the method, performs the part of the extraction step relating to getting and copying data, corresponding to the implementation of the boxes 23, 24, 25, 26 in figure 4.

### Extract data to a Word document

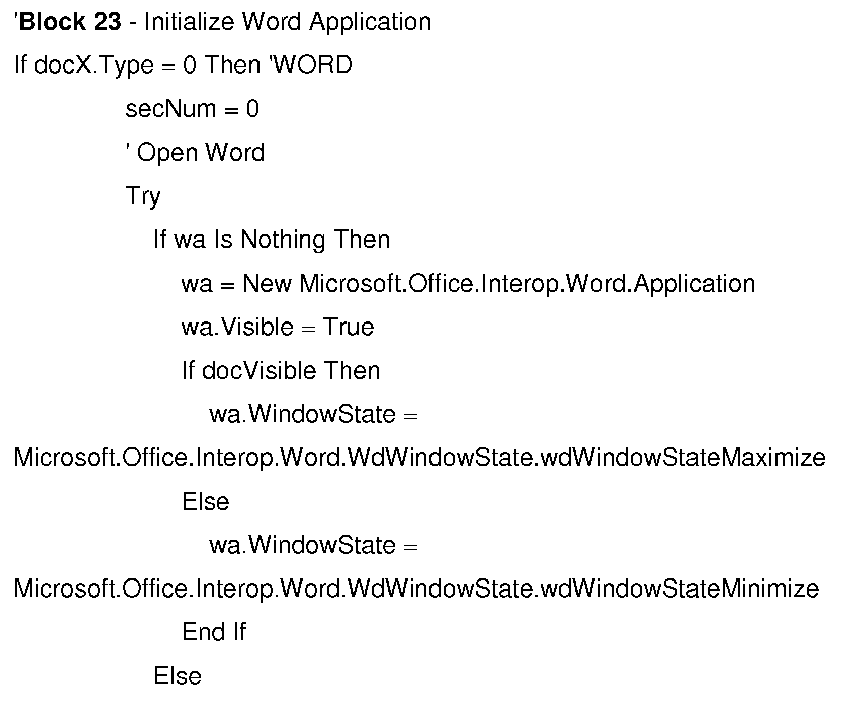

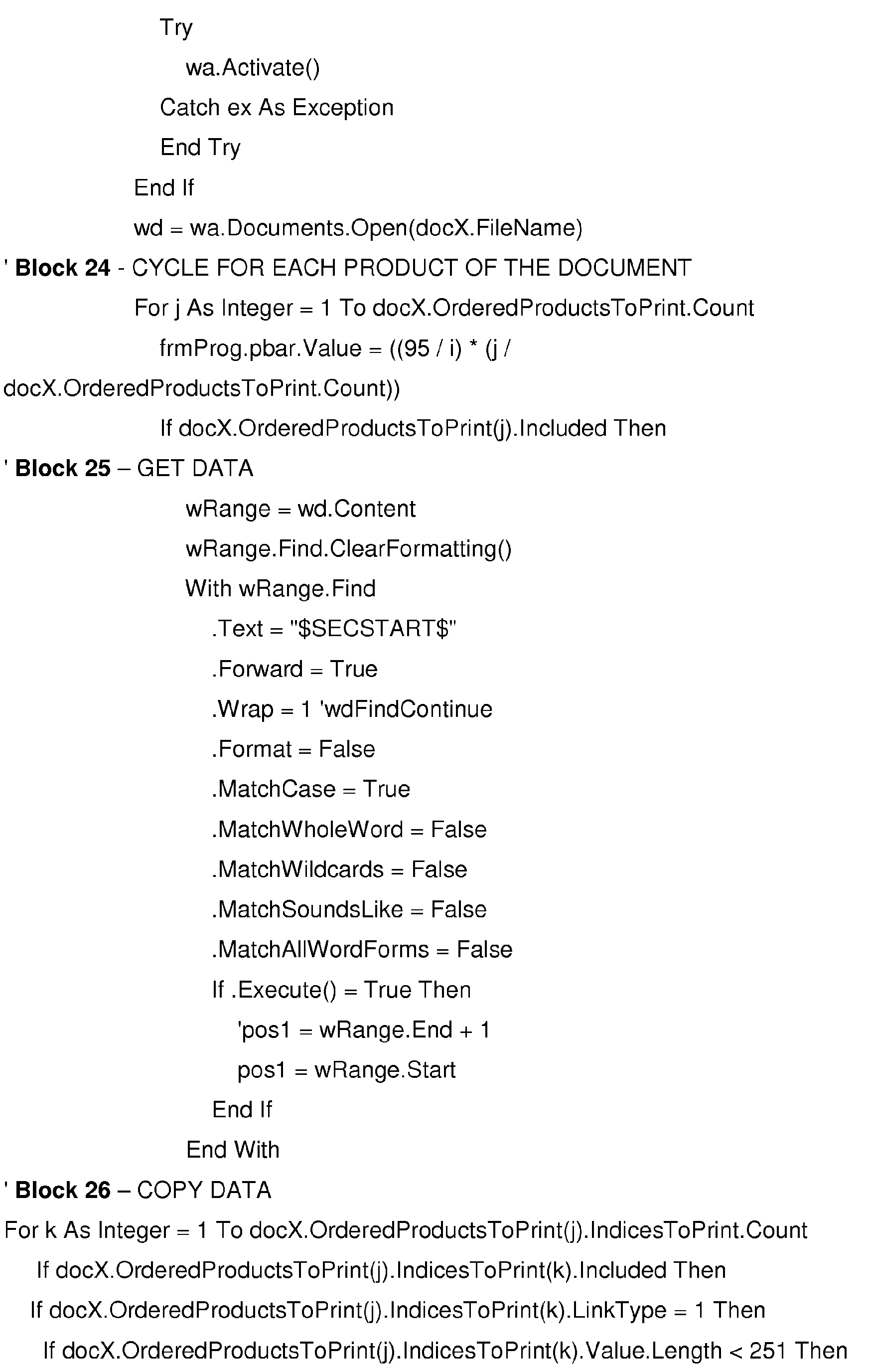

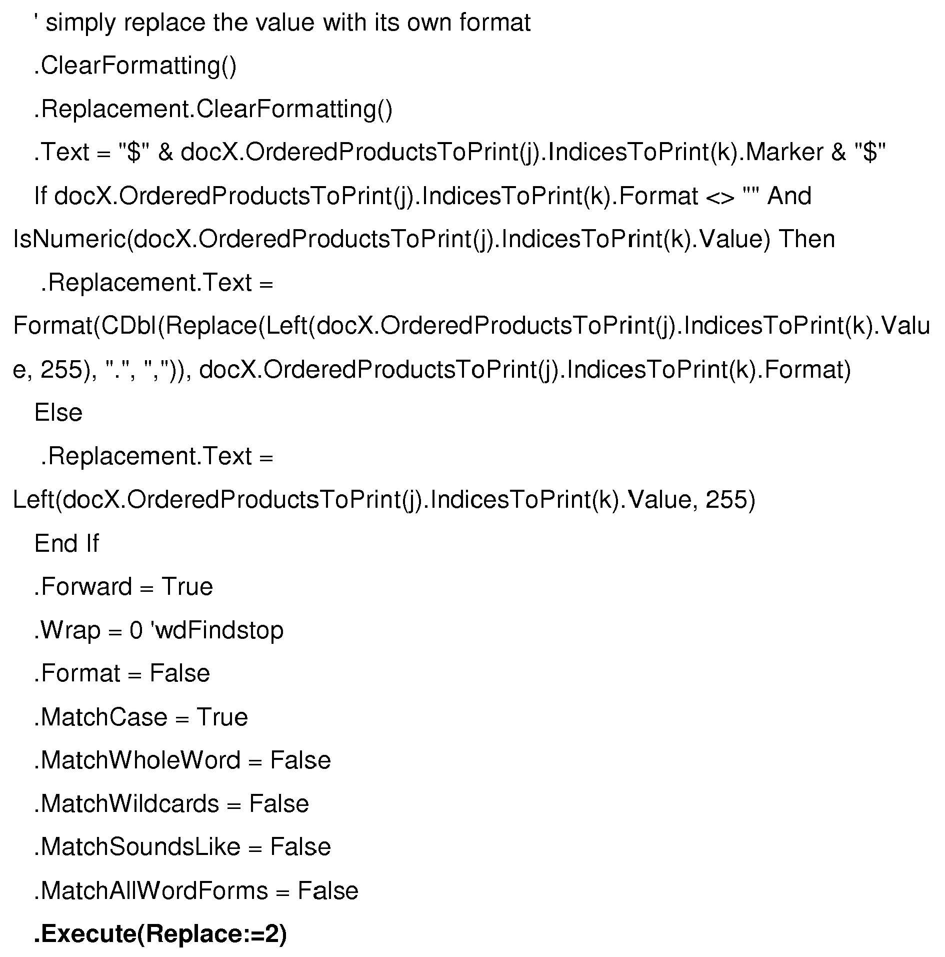

The present invention can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

The advantages obtained by the application of the present invention are clear.

Both the business management program and the personal informatics program can be used as they are, without the necessity of any modification.

Any user capable of using a text editor or a spreadsheet program can operate on the data of a business management program without the need to open and use it, and viceversa.

Further implementation details will not be described, as the man skilled in the art is able to carry out the invention starting from the teaching of the above description.

Although the invention has been described in detail for the purpose of illustration only, it is understood that such detail is solely for that purpose and that many variations, changes, additions and substitutions can be made therein by those of ordinary skill in the art without departing from the spirit and scope of the invention.

## Claims

1. Method for directly and automatically loading data from documents and/or extracting data to documents, **characterized in that**
it provides for the direct and automatic conversion of data in two directions, respectively:
- a first direction of "loading from documents", in a "loading step", from free text and data, to data rigidly organized into boxes of business management program;
- a second direction of "extraction to documents", in an "extraction step", from data rigidly organized into boxes of business management program, to text and free data;
also **characterized in that** said "loading step" comprises:
- setting predefined rules;
- on the basis of said predefined rules recognizing said free text and data on the basis of their context, their position in the text, their format;
- creating a consistent set of corresponding business data;
- automatically inputting the set of corresponding business data into boxes of business management program to create said data rigidly organized;
also **characterized in that** said "extraction step" comprises:
- reading data directly from the boxes of business management program containing said data rigidly organized;
- setting a configuration file with a predefined format for said data;
- creating a text document or a spreadsheet where said data are organized to compose said text and free data.

2. Method according to claim 1, **characterized in that** in said loading step:
- said setting predefined rules comprises reading said free text and data in a text document , directly if it is in digital format, or by performing OCR (Optical character recognition) if it is in image format; and
- said creating a consistent set of corresponding business data comprises converting the read fields of the text document containing said free text and data into said business data on the basis of a set of rules, stored in tables that contain factory predefined values which can be updated or modified.

3. Method according to claim 2, **characterized in that** in said set of rules comprise:
- Heuristic rules, which are general rules that can be applied to any document, including searching for strings in appropriate date format; and searching for "title" fields or for bold characters;
- Document specific rules including: when the same kind of document format is used repeatedly, specifying in a separate "learning" phase the position (row, column or x, y coordinates) of all variable and fixed key data, the positions being stored as rules for that specific document; distinguishing the kind of document by the position of fixed key data, and then using the stored positions to extract data.

4. Method according to claim 1, **characterized in that** in said extracting step:
- stating in said configuration file, for each data page of the document, the format of the final document and the position of all data in it, by creating a template file,
- said template file being composed of a document with all fixed data (in the same position as in the final document), and of a list of variable data, each entry of said list containing the name of every piece of data in the document, together with the position (row, column or x,y coordinates) of data in the final document.

5. Method according to claim 4, **characterized in that** said extracting step comprises:
- choosing the type of document from a list, or going to a data screen and pressing a special key;
- finding the template file for the wanted document;
- copying all fixed parts of the document from the template file to the output document;
- simulating key presses and screen readings to select the wanted data pages and reading data;
- applying the list in the template file to transfer data to the right positions of the final document, for each data field;
- saving the output document as said text document or spreadsheet.

6. Method according to claim 4, **characterized in that** said extracting step comprises:
- choosing the type of document from a list, or going to a data screen and pressing a special key;
- finding the template file for the wanted document;
- copying all fixed parts of the document from the template file to the output document;
- sending data and receiving data directly, through Application Program Interfaces (API), which retrieve data from specific fields and send them out directly;
- applying the list in the template file to transfer data to the right positions of the final document, for each data field;
- saving the output document as said text document or spreadsheet.

7. Computer program comprising computer program code means adapted to perform all the steps of claims 1 to 6, when said program is run on a computer.

8. A computer readable medium having a program recorded thereon, said computer readable medium comprising computer program code means adapted to perform all the steps of claims 1 to 6, when said program is run on a computer.
